# FASCICULE DE BREVET EUROPEEN

(11) **EP 3 884 448 B1**
(45) Date de publication et mention de la délivrance du brevet: **08.11.2023**
(21) Numéro de dépôt: 19801391.4
(22) Date de dépôt: 15.11.2019
(51) Int. Cl.: G06Q 10/08, G06Q 50/28, G06Q 10/0833, G06Q 10/0835

(54) **SYSTEME D'ACHEMINEMENT D'OBJETS A INITIATION DE CYCLE D'ACHEMINEMENT SIMPLIFIE**
SYSTEM ZUR LEITWEGLENKUNG VON OBJEKTEN MIT VEREINFACHTEM LEITWEGLENKUNGZYKLUSBEGINN
SYSTEM FOR ROUTING OBJECTS WITH SIMPLIFIED ROUTING CYCLE INITIATION

(30) Priorité: 23.11.2018 FR 1871794
(43) Date de publication de la demande: 29.09.2021
(73) Titulaire: PA.COTTE SA, 1009 Pully (CH)
(72) Inventeur: COTTE, Pierre-Alain, 92224 Amberg (DE); NANSOT, Thomas, 44100 Nantes (FR)
(74) Mandataire: reuteler & cie SA
(86) Numéro de dépôt international: PCT/EP2019/081559
(87) Numéro de publication internationale: WO 2020/104340

(56) Documents cités:
- CN-A- 107 270 604
- CN-A- 107 491 917
- US-A1- 2016 066 733
- US-A1- 2017 228 951
- US-A1- 2018 336 515
- NÉSTOR ÁLVAREZ-DÍAZ ET AL: "Smart contracts based on blockchain for logistics management", IML '17 PROCEEDINGS OF THE 1ST INTERNATIONAL CONFERENCE ON INTERNET OF THINGS AND MACHINE LEARNING, 1 janvier 2017 (2017-01-01), pages 1-8, XP055638481, 2 Penn Plaza, Suite 701New YorkNY10121-0701USA DOI: 10.1145/3109761.3158384 ISBN: 978-1-4503-5243-7

## Description

Le domaine de l'invention est celui de la logistique. Plus précisément, l'invention concerne l'acheminement d'objets, et plus précisément d'objets généralement issus de plateformes de commerce électronique, ou transférés d'un particulier à un autre.

A ce titre, l'invention concerne un système d'acheminement d'objets dont le poids n'excède pas, de préférence, 5 kg.

Bien entendu, l'invention s'applique également à des objets de dimension et/ou de poids inférieur, pouvant aller jusqu'à l'expédition de simples plis.

Le système selon l'invention se base sur un acheminement par des acteurs d'une chaine logistique, par exemple une chaine logistique professionnelle. Les acteurs sont donc des professionnels du transport.

Dans une moindre mesure, les acteurs peuvent être des particuliers profitant de leur déplacement personnel pour assurer l'acheminement d'un ou plusieurs objets.

Ce système d'acheminement d'objets par les acteurs comprend :
- des emballages formant des conteneurs pour le transport des objets ;
- une plateforme informatique incluant au moins une base de données ;
- une pluralité d'unités informatiques détenues par les acteurs,
- une application informatique destinée à être chargée par chaque unité informatique.

Lors de l'utilisation du système, un individu ou une personne souhaitant envoyer ou acheminer un objet depuis un premier point jusqu'à un point d'arrivée, renseigne via l'application informatique ou via un site internet les coordonnées de départ de l'emballage et les coordonnées d'arrivée de l'emballage qui sont enregistrées dans une base de données de la plateforme informatique.

Une fois les coordonnées saisies et toutes les informations d'acheminement enregistrées, l'utilisateur insère le ou les objets à acheminer dans l'emballage puis verrouille l'emballage et notifie que l'emballage est verrouillé par l'application informatique de son unité informatique. Cela a pour effet d'émettre une requête d'enlèvement auprès de la plateforme informatique qui transmet cette requête aux acteurs via un nuage informatique. La notification du verrouillage de l'emballage est notamment faite par un échange direct entre l'emballage et l'application mobile de l'unité informatique de l'utilisateur.

Lorsqu'un acteur souhaite répondre favorablement à la requête d'acheminement, ce dernier notifie à la plateforme informatique via l'application de son unité informatique la prise en charge de l'emballage.

Durant l'acheminement, plusieurs acteurs peuvent devenir responsables de l'emballage jusqu'à ce que ce dernier atteigne sa destination finale.

Une fois arrivé au point de livraison, l'acteur en charge de l'emballage notifie à la plateforme informatique, via l'application informatique de son unité informatique, qu'il a délivré le colis. L'emballage peut alors être ouvert par le destinataire afin de récupérer le ou les objets qu'il contient. L'emballage redevient ensuite libre d'utilisation pour être soit retourné dans un lieu de stockage, soit servir d'emballage pour un nouvel acheminement.

Un tel procédé donne satisfaction mais reste cependant perfectible.

En effet, le temps de manipulation et le temps de traitement préalable à l'acheminement des objets est relativement long et peut être avantageusement réduit.

En particulier, il est nécessaire à chaque acteur participant à l'acheminement, et en particulier au premier acteur initiant l'acheminement, de recourir à une interface informatique permettant de communiquer avec la plateforme informatique.

Le document US2016/0066733 décrit un système de livraison de colis comprenant une boîte à serrure comprenant une porte permettant d'accéder à un espace de stockage, un mécanisme de verrouillage de porte à commande électrique et un dispositif de lecture de colis.

Le document US2017/0228951A1 décrit un système pour transporter de manière sûre des médicaments ou d'autres articles, le système comprenant un système informatique central et une pluralité de boîtes relais transportables séparément et verrouillables, un couvercle de chaque boîte pouvant être déverrouillé sur autorisation du système informatique central.

L'invention a notamment pour objectif de pallier les inconvénients de l'art antérieur.

Plus précisément, l'invention a pour objectif de proposer un système d'acheminement d'objets par des acteurs qui soit simple et rapide de mise en oeuvre.

En ce sens, l'invention a pour objectif de fournir un tel système qui permet de supprimer le recours systématique à une interface informatique pour communiquer avec la plateforme informatique. L'invention a également pour objectif de fournir un tel système d'acheminement d'objets qui soit sûr en termes de protection de l'objet ou des objets à transporter.

L'invention a en outre pour objectif de fournir un tel système d'acheminement qui est rapide et dont l'impact sur l'environnement est mesuré.

Ces objectifs ainsi que d'autres qui apparaitront par la suite, sont atteints grâce à l'invention qui a pour objet un système d'acheminement d'objets, comprenant :
- des emballages intégrant des premiers moyens de communication sans fil ;
- une plateforme informatique incluant au moins une base de données regroupant, pour chaque emballage, des informations d'un cycle d'acheminement ;

la plateforme informatique étant paramétrée pour effectuer un suivi numérique de géolocalisation horodatée de chaque emballage à partir d'une consigne de début de cycle d'acheminement,
caractérisé en ce que chaque emballage porte un actionneur électronique couplé aux premiers moyens de communication sans fil pour émettre un premier signal à destination de la plateforme informatique, ledit premier signal étant interprété par la plateforme informatique en tant que consigne de début de cycle d'acheminement.

Un tel système d'acheminement d'objets par des acteurs permet, grâce à l'actionneur électronique, de faciliter le démarrage d'un cycle d'acheminement.

Plus précisément, en appuyant simplement sur l'actionneur électronique, l'acteur peut lancer un cycle d'acheminement sans avoir à utiliser l'application informatique qui se trouve sur son unité informatique.

De préférence, le système d'acheminement d'objets comprend également :
- une pluralité d'unités informatiques détenues par des acteurs d'une chaine logistique et comprenant chacune des deuxièmes moyens de communication destinés à être appairés avec les premiers moyens de communication sans fil d'un emballage, une application informatique destinée à être chargée par chaque unité informatique, pour permettre un échange de données informatiques entre les unités informatiques et la ou les bases de données.

L'échange d'informations entre l'emballage, la plateforme informatique et les unités informatiques se fait ainsi de manière aisée et rapide, voire intuitive, pour l'acteur.

Avantageusement, la plateforme informatique est paramétrée pour émettre une requête de prise en charge d'un emballage à au moins une unité informatique à partir d'une consigne de début de cycle d'acheminement.

Cela permet notamment, par la seule action d'un utilisateur sur l'actionneur électronique, d'informer plusieurs acteurs de la disponibilité d'un emballage pour une mission d'acheminement.

Autrement dit, le processus de mise en relation d'un acteur avec un emballage est assuré par la plateforme informatique qui permet d'informer plusieurs membres ou plusieurs acteurs en même temps.

De préférence, la base de données regroupe :
- des coordonnées de départ de l'emballage ;
- des coordonnées d'arrivée de l'emballage,
- une série de premiers codes d'identification associés chacun à un emballage,
- une série de deuxième codes d'identification associés chacun à un acteur.

L'identification des emballages et l'identification des acteurs est ainsi dématérialisée pour faciliter et accélérer la prise en charge d'un emballage par un acteur.

Selon un aspect avantageux, la plateforme informatique est paramétrée pour associer un code d'identification d'un emballage avec un code d'identification d'un acteur, à partir d'une consigne de début de cycle et d'une acceptation de la requête de prise en charge par un acteur via l'application informatique.

Un tel paramétrage de la plateforme informatique permet que, dès le début de cycle, c'est-à-dire dès l'appui sur l'actionneur électronique par un utilisateur, et après acceptation de la requête de prise en charge par un acteur, l'emballage destiné à acheminer l'objet de l'utilisateur est directement associé à un acteur de sorte que celui-ci puisse recevoir les coordonnées de départ et les coordonnées d'arrivée de l'emballage. La notification de ces éléments à l'acteur peut notamment être faite par le biais de l'application informatique.

Selon un mode de réalisation préférentiel, chaque actionneur électronique est couplé aux premiers moyens de communication sans fil pour émettre, à destination de la plateforme informatique, un deuxième signal interprété par la plateforme informatique en tant que requête d'association du code d'identification d'un nouvel acteur avec le code d'identification de l'emballage.

Dans le cas d'un changement d'acteur en charge de l'emballage durant son acheminement, l'appui par un acteur sur l'actionneur électronique de l'emballage permet alors de pouvoir changer et transférer la responsabilité de l'emballage d'un premier acteur à un deuxième acteur, cela sans nécessiter de passer par l'application. Ainsi, l'acheminement de l'emballage est fluidifié.

Avantageusement, la base de donnée regroupe alors également, pour chaque emballage, un code de responsabilité destiné à identifier l'acteur transitoirement en charge de l'emballage, et la plateforme informatique est paramétrée pour recevoir un signal de prise en responsabilité de l'acteur transitoirement en charge de l'emballage par l'intermédiaire de l'application informatique contenue dans l'unité informatique que l'acteur détient, et modifier en conséquence, avec le code d'identification dudit acteur, le code de responsabilité associé à l'emballage.

Ce paramétrage permet ainsi de garantir la sécurité de l'emballage et donc des objets qui se trouvent à l'intérieur. En effet, le changement d'acteur s'accompagnant du changement du code de responsabilité associé à l'emballage, il est possible de suivre et de tracer les différents acteurs en charge de l'emballage, notamment pour permettre d'identifier le responsable de l'emballage en cas de difficulté ou de problème lors de l'acheminement.

Préférentiellement, le système d'acheminement d'objets met en oeuvre une chaîne de blocs programmée pour autoriser ou refuser la modification du code de responsabilité associé à l'emballage.

L'utilisation d'une chaîne de blocs permet de fiabiliser l'acheminement des emballages. En effet, une chaine de blocs ne peut être modifiée que pour l'ajout de nouvelles données.

Autrement dit, il n'est pas possible de modifier la chaîne de blocs pour supprimer un événement passé, par exemple la prise en charge et l'association de responsabilités d'un acteur ayant ou étant sensé avoir transféré l'emballage à un autre acteur.

Ainsi, en cas de problème lors de l'acheminement de l'emballage et des objets, il est possible de retrouver quel était l'acteur responsable de l'emballage à un instant donné, celui-ci étant identifié dans la chaîne de blocs. Le suivi de la responsabilité est alors garanti.

Selon un aspect préférentiel, la plateforme informatique est paramétrée pour transmettre aux acteurs des informations d'acheminement via l'application informatique.

Cela permet notamment aux acteurs de pouvoir obtenir tous les détails de l'acheminement les concernant, sans recourir à un échange avec d'autres acteurs ou avec un personnel dédié. Cela permet notamment de laisser temporairement un emballage dans un endroit sûr pour un transfert entre deux acteurs, lorsque ceux-ci ne sont pas disponibles au même instant. Le premier acteur en charge de l'emballage n'est alors pas forcé d'attendre l'arrivée de l'autre acteur pour lui remettre les informations liées à l'acheminement de l'emballage.

Par ailleurs, les données ou informations d'acheminement prennent la forme de données informatiques et non de données physiques, garantissant alors leur intégrité dans le temps. Avantageusement, chaque emballage comprend un dispositif de verrouillage pouvant adopter :
- un état ouvert, permettant l'accès à l'intérieur de l'emballage,
- un état fermé, bloquant l'accès à l'intérieur de l'emballage,
le dispositif de verrouillage étant couplé aux premiers moyens de communication sans fil pour transmettre à la plateforme informatique un troisième signal définissant l'état ouvert ou l'état fermé du dispositif de verrouillage.

Grâce à l'accouplement du dispositif de verrouillage avec les premiers moyens de communication sans fil, il est possible de suivre à tout instant l'état ouvert ou fermé de l'emballage. Cela permet notamment d'accroître la garantie de sécurité des objets à l'intérieur de l'emballage.

En outre, cela permet également d'informer les acteurs ou même l'émetteur et/ou le destinataire que l'emballage a été ouvert sans que cela ne soit autorisé, c'est-à-dire frauduleusement.

Dans ce cas, la plateforme informatique est avantageusement paramétrée pour interdire le début d'un cycle d'acheminement lorsque le troisième signal définit un état ouvert du dispositif de verrouillage.

Cela permet de garantir la sécurité des objets à transporter mais également de ne pas mettre en défaut la responsabilité de l'acteur en charge de l'emballage.

En effet, si l'emballage n'était pas fermé lors du lancement du cycle d'acheminement, l'objet situé à l'intérieur de l'emballage pourrait être retiré ou modifié. Le destinataire du colis pourrait alors se prévaloir d'une faute de l'un des acteurs lors du transport de l'objet ayant conduit à l'endommagement de l'objet ou, encore plus grave, au vol de l'objet.

Grâce à ce troisième signal et à l'empêchement du début de cycle d'acheminement lorsque le troisième signal définit un état ouvert du dispositif de verrouillage, la sécurité est assurée sur le fait que l'objet à l'intérieur de l'emballage n'a pas pu être volé ou endommagé de manière volontaire par l'un des acteurs lors de l'acheminement.

De préférence, le troisième signal est envoyé simultanément au premier signal ou quasiment.

L'envoi simultané du troisième signal au premier signal permet de fluidifier le cycle d'acheminement. En effet, par un simple appui sur l'actionneur électronique, la requête de prise en charge est envoyée aux acteurs seulement si l'emballage et notamment le dispositif de verrouillage est dans son état fermé.

En d'autres termes, cela permet d'éviter une fausse information d'acheminement à destination d'un acteur qui serait alors amené à se déplacer pour prendre possession d'un emballage alors que ledit emballage ne présente pas les garanties nécessaires à l'acheminement sécurisé des objets. Avantageusement, chaque unité informatique comprend des moyens de géolocalisation susceptibles de déterminer des coordonnées instantanées de géolocalisation d'un emballage qui lui est associé.

Grâce aux moyens de géolocalisation, il est possible de suivre l'avancée de l'acheminement de l'emballage.

Autrement dit, le destinataire ou l'émetteur de l'emballage peut suivre son avancée et se rassurer sur le bon déroulement de l'acheminement.

Par ailleurs, cela permet de garantir la disponibilité du destinataire pour recevoir son colis puisque ce dernier peut à tout instant connaître la position de l'emballage et donc se rendre disponible pour le récupérer en toute sécurité.

Il est en outre possible de suivre l'évolution du transit de l'emballage lors de son acheminement pour vérifier que celui-ci ne dévie pas d'une route prédéterminée. En cas de déviation, une alerte peut être donnée à l'utilisateur, à l'émetteur et/ou au destinataire, de sorte à pouvoir agir et se prémunir de toute difficulté.

Par ailleurs, cela permet, notamment pour un service de sécurité, de pouvoir intervenir de manière rapide et sûre pour reprendre possession de l'emballage ayant dévié de sa route ou alors informer le client, c'est-à-dire le destinataire et/ou l'émetteur d'un changement inopiné de trajectoire de l'emballage, lié à une perturbation temporaire imprévue.

Préférentiellement, chaque emballage comprend un dispositif de notification et la plateforme est paramétrée pour déclencher le dispositif de notification en fonction d'une action prédéterminée parmi lesquelles :
- un début de cycle d'acheminement ;
- un état ouvert du dispositif de verrouillage ;
- une modification du code de responsabilité associé à l'emballage.

Le dispositif de notification permet ainsi une interaction avec le ou chaque acteur en charge de l'emballage pour avertir ce dernier d'un nouvel état durant le cycle d'acheminement.

Par ailleurs, cela permet d'éviter à l'acteur d'avoir à utiliser son unité informatique pour consulter, via l'application informatique, un changement d'état de l'acheminement, lorsque le changement est par exemple la validation du changement de code de responsabilité par exemple.

A titre d'exemple, lorsqu'un changement de responsabilité ou un changement d'itinéraire doit être prévu, l'emballage peut avertir l'acteur qui en a la charge de sorte que celui-ci prenne les dispositions nécessaires pour agir, le cas échéant en consultant l'application informatique, notamment lorsque les coordonnées de livraison ont changé.

Selon un mode de réalisation préféré, les unités informatiques appartiennent au groupe suivant :
- ordiphones
- ordinateur
- tablette informatique.

De telles unités informatiques sont généralement des unités nomades permettant à l'acteur d'être en lien permanent avec l'emballage durant l'acheminement.

En effet, les unités informatiques appartenant à ce groupe présentent généralement des composants permettant la communication directe avec la plateforme informatique et l'emballage, par des moyens qui leur sont propres.

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
[Fig.1] est une vue schématique représentant un système d'acheminement d'objets selon l'invention ;
[Fig.2] est une vue schématique représentant les différentes données enregistrées dans les bases de données d'une plateforme informatique du système d'acheminement d'objets selon l'invention ;
[Fig.3] est une vue schématique d'une chaîne de blocs utilisée par un nuage informatique de la plateforme informatique ;
[Fig.4] à [Fig.8] illustrent différents cas d'utilisation du système d'acheminement d'objets selon l'invention.

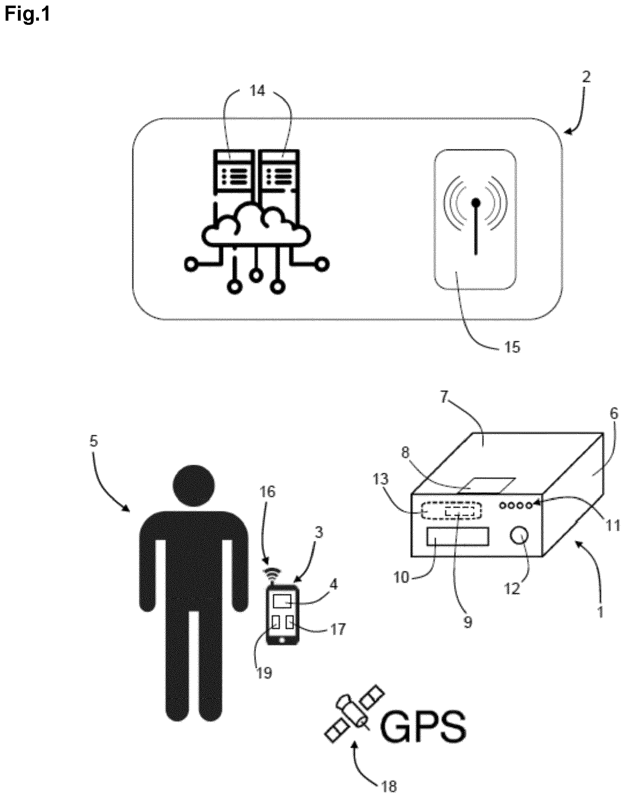

Tel qu'illustré sur la figure 1, le système d'acheminement d'objets selon l'invention comprend :
- au moins un emballage 1 ;
- une plateforme informatique 2 ;
- une pluralité d'unités informatiques 3 ;
- une application informatique 4 ;

Le système d'acheminement d'objets met en oeuvre également une communauté d'acteurs 5 d'une chaine logistique pour réaliser l'acheminement des objets.

Chaque emballage 1 forme un conteneur pour le transport des objets. L'emballage 1 comprend ainsi une caisse 6 définissant un volume interne à l'intérieur duquel est positionné au moins un objet à transporter, et un couvercle 7 destiné à fermer le volume interne.

Chaque emballage 1 comprend également un dispositif de verrouillage 8 permettant de verrouiller le couvercle 7 dans une position de fermeture du volume interne de sorte à limiter l'accès au volume interne et donc à assurer la sécurité de l'objet ou des objets situés dans le volume interne.

Plus précisément, le dispositif de verrouillage 8 de l'emballage 1 peut adopter :
- un état ouvert, permettant l'accès au volume interne de l'emballage 1, c'est-à-dire à l'intérieur de l'emballage 1 ;
- un état fermé, bloquant l'accès au volume interne de l'emballage 1, c'est-à-dire à l'intérieur de l'emballage 1.

Chaque emballage 1 intègre également :
- des premiers moyens de communication 9 sans fil ;
- un dispositif d'affichage 10 ;
- au moins un dispositif de notification 11 ;
- un actionneur électronique 12.

Les premiers moyens de communication 9 sont avantageusement inclus dans un bloc d'intelligence artificielle 13 solidarisé sur une paroi de la caisse 6 de l'emballage 1.

Le dispositif d'affichage 10 se présente avantageusement sous la forme d'un écran permettant l'affichage d'une série de caractères alphanumériques ou tout autre motif tel qu'une image.

Le dispositif de notification 11 se présente quant à lui sous la forme d'au moins une LED permettant d'émettre un signal lumineux.

Tel qu'illustré sur la figure 1, le dispositif de notification 11 comprend quatre diodes électroluminescentes. Toutefois, le dispositif de notification 11 peut comprendre plus ou moins de quatre Diodes électroluminescentes.

Chaque diode électroluminescente est avantageusement du type RGB, c'est-à-dire qu'elle émettent principalement les trois couleurs primaires, à savoir le rouge (R pour « Red » en anglais), le vert (G pour « Green » en anglais) et le bleu (B pour « Blue » en anglais). A partir de ces trois couleurs primaires, il est possible, en les mélangeant, de créer un grand nombre de couleurs.

Chaque diode peut également émettre un signal lumineux de la même couleur que celui des autres diodes électroluminescentes.

Autrement dit, la notification émise par les diodes électroluminescentes peut prendre la forme d'un clignotement particulier sans recourir à l'utilisation d'une couleur particulière.

En variante non illustrée, le dispositif de notification 11 peut également prendre la forme d'un avertisseur sonore, par exemple un haut-parleur.

Selon une autre variante de réalisation non illustrée, le dispositif de notification 11 peut être intégré au dispositif d'affichage 10, ou en d'autres termes formé par le dispositif d'affichage 10. L'actionneur électronique 12 se présente sous la forme d'un bouton, par exemple un bouton poussoir, positionné sur une face de la caisse 6 de sorte à pouvoir être actionné par un utilisateur ou un acteur 5 depuis l'extérieur de l'emballage 1.

Comme décrit ci-après, l'actionneur électronique 12 est couplé aux premiers moyens de communication 9 sans fil pour émettre un premier signal à destination de la plateforme informatique 2. Ce premier signal est alors interprété par la plateforme informatique 2 en tant que consigne de début de cycle d'acheminement.

L'actionneur électronique 12 est également couplé aux premiers moyens de communication 9 sans fil pour émettre, à destination de la plateforme informatique 2, un deuxième signal interprété par la plateforme informatique 2 en tant que requête d'association d'un acteur 5 avec un emballage 1.

Par ailleurs, le dispositif de verrouillage 8 est lui aussi couplé au premier moyen de communication 9 sans fil pour transmettre à la plateforme informatique 2 un troisième signal définissant l'état ouvert ou l'état fermé du dispositif de verrouillage 8.

La plateforme informatique 2 comprend au moins une base de données 14 regroupant pour chaque emballage 1 des informations d'un cycle d'acheminement sous forme de données informatiques D1, D2, D3...Dn.

La plateforme informatique 2 inclut en outre des deuxièmes moyens de communication 15 sans fil destinés à communiquer et à permettre l'échange de données informatiques entre la plateforme informatique 2 d'une part et l'emballage 1 et/ou l'unité informatique 3 d'autre part, comme décrit ci-après.

Chaque unité informatique 3 est détenue par un acteur 5 . Plus précisément, chaque acteur 5 détient une unité informatique 5 regroupant des données personnelles et permettant à l'acteur 5 de communiquer avec l'emballage 1 d'une part et avec la plateforme informatique 2 d'autre part.

Pour cela, la plateforme informatique 2 communique avec un nuage informatique 2a permettant un échange de données entre plusieurs acteurs 5 et la plateforme informatique 2 tel que décrit ci-après. Le nuage informatique 2a permet également le stockage de données, notamment pour délester de manière au moins temporaire la base de données 14 des informations qu'elle contient.

Chaque unité informatique 3 comprend des troisièmes moyens de communication 16 sans fil destinés à être appairés avec les premiers moyens de communication 9 sans fil d'un emballage et avec les deuxièmes moyens de communication 14 sans fil de la plateforme informatique 2. Comme décrit précédemment, chaque unité informatique 3 est équipée de l'application informatique 4 chargée préalablement par l'acteur 5 possédant l'unité informatique 3.

Cette application informatique 4 permet notamment un échange de données informatiques entre les unités informatiques 3 et la ou les bases de données 4 de la plateforme informatique 2.

A titre indicatif, chaque unité informatique 3 appartient au groupe suivant :
- ordiphone ;
- ordinateur ;
- tablette informatique.

Des unités informatiques 3 de ce groupe sont notamment nomades c'est-à-dire qu'elles peuvent suivre l'acteur 5 durant ses déplacements et notamment durant l'acheminement de chaque emballage 1 depuis une destination de départ jusqu'à une destination d'arrivée.

Chaque unité informatique 3 comprend également des moyens de géolocalisation 17 susceptibles de déterminer des coordonnées instantanées de géolocalisation d'un emballage 1 qui lui est associé.

Plus précisément, toujours selon la figure 1, les moyens de géolocalisation 17 permettent d'échanger avec un système de géolocalisation 18, comprenant par exemple des satellites, pour déterminer, par exemple par triangulation, la position exacte de l'emballage 1 durant son acheminement.

Chaque unité informatique 3 comprend en outre un calculateur 19 paramétré pour comparer les coordonnées instantanées de géolocalisation avec des coordonnées de départ et des coordonnées d'arrivée de l'emballage 1.

Cela permet de définir un état d'avancement du cycle d'acheminement et également de suivre l'acheminement de chaque emballage 1 afin de garantir la sécurité des objets qui sont insérés.

Plus particulièrement, en cas de déviation d'un itinéraire prédéfini, le calculateur 19 permet d'informer la plateforme informatique 2 et donc chaque acteur 5 de la dérive de l'un des emballages 1.

En variante non illustrée sur les figures, les moyens de géolocalisation 17 sont intégrés aux emballages 1. Plus particulièrement, chaque emballage 1 comprend des moyens de géolocalisation 1. Les emballages 1 peuvent ainsi communiquer directement avec la plateforme informatique 2 pour permettre le suivi de la position de chaque emballage 1.

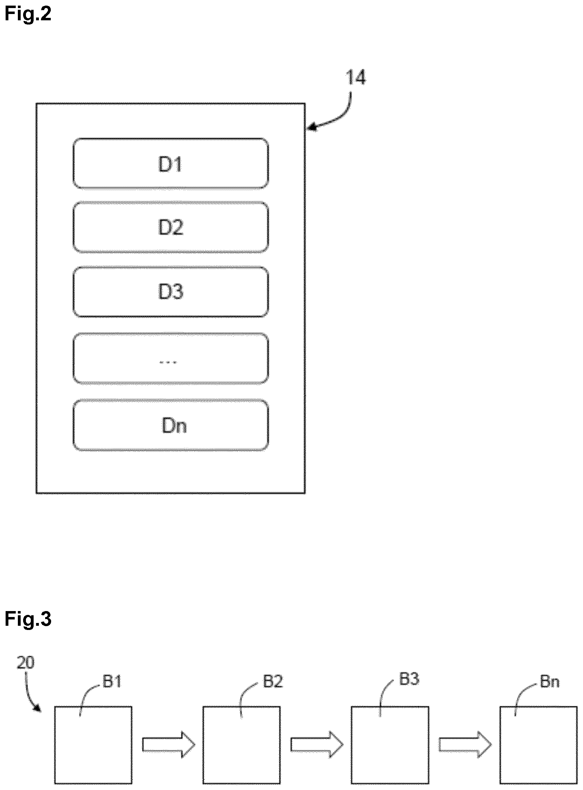

La comparaison des coordonnées instantanées de géolocalisation avec les coordonnées de départ et des coordonnées d'arrivée de l'emballage 1 est alors réalisée par la plateforme informatique 2. En référence à la figure 2, chaque base de données 14 intègre pour chaque emballage 1 :
- les coordonnées de départ de l'emballage 1 correspondant à un cycle d'acheminement ;
- les coordonnées d'arrivée dudit emballage 1 correspondant au même cycle d'acheminement ;
- un code d'identification de chaque emballage 1 ;
- un code d'identification de chacun des acteurs 5 ;
- un code de responsabilité associé à chaque emballage 1.

Ainsi, pour chaque emballage 1, la base de données 14 comprend un code d'identification de l'emballage 1 qui est associé à un code de responsabilité de celui-ci.

En référence à la figure 2 qui décrit une chaîne de blocs 20 dont l'écriture, c'est-à-dire l'ajout d'un nouveau bloc, se fait de manière séquentielle. Comme cela est illustré sur la figure 3, lorsqu'un premier bloc B1 est validé, un deuxième bloc B2 peut être créé et positionné à la suite du premier bloc B1, puis un troisième bloc B3, jusqu'à un dernier bloc BN. Le dernier bloc BN est alors le bloc qui est dans un état valide, c'est-à-dire celui dont les informations qu'il contient, si elles sont vérifiées, sont vraies.

Une telle chaîne de blocs 20 offre un avantage en terme de sécurité puisque lorsqu'un bloc inséré dans la chaîne de blocs 20, il est validé, c'est-à-dire qu'il ne peut plus être modifié.

En d'autres termes, tel qu'illustré schématiquement sur la figure 3, la chaîne de blocs 20 ne peut évoluer que de la gauche vers la droite, c'est-à-dire selon le sens des flèches et non en sens inverse.

Un bloc précédent ne peut donc qu'être lu et ne peut plus être modifié, ce qui favorise le suivi et la traçabilité des informations contenues dans chaque bloc 20.

Par ailleurs, la chaîne de blocs 20 n'est accessible qu'aux acteurs qui l'implémentent, c'est-à-dire aux acteurs 5.

La plateforme informatique 2 est paramétrée pour effectuer un suivi numérique de géolocalisation horodatée de chaque emballage 1 à partir d'une consigne de début de cycle d'acheminement.

La plateforme informatique 2 est également paramétrée pour émettre une requête de prise en charge d'un emballage 1 à au moins une unité informatique 3 à partir d'une consigne de début de cycle d'acheminement, comme décrit ci-après.

La plateforme informatique 2 est de plus paramétrée pour associer un code d'identification d'un emballage 1 contenu dans l'une des bases de données 14 avec un code d'identification d'un acteur 5.

La plateforme informatique 2 est de plus paramétrée pour recevoir un signal de prise en charge et de prise en responsabilité d'un acteur transitoirement en charge de l'emballage 1, par exemple par l'intermédiaire de l'application informatique 4 contenue dans l'unité informatique 3 que l'acteur 5 détient, et pour modifier en conséquence, avec le code d'identification dudit acteur 5, le code de responsabilité associé à l'emballage 1.

Cette association est réalisée à partir d'une consigne de début de cycle et d'une acceptation de la requête de prise en charge par un acteur 5, notamment via l'application informatique 4 comme expliqué ci-après.

La plateforme informatique 2 est encore paramétrée pour transmettre aux acteurs 5 des informations d'acheminement, notamment via l'application informatique 4.

Plus précisément, la plateforme informatique 2 est paramétrée pour transmettre à l'acteur 5 en charge d'un emballage 1 les informations d'acheminement liées audit emballage 1.

La plateforme informatique 2 est de plus paramétrée pour interdire le début d'un cycle d'acheminement lorsque le deuxième signal définit un état ouvert du dispositif de verrouillage 8.

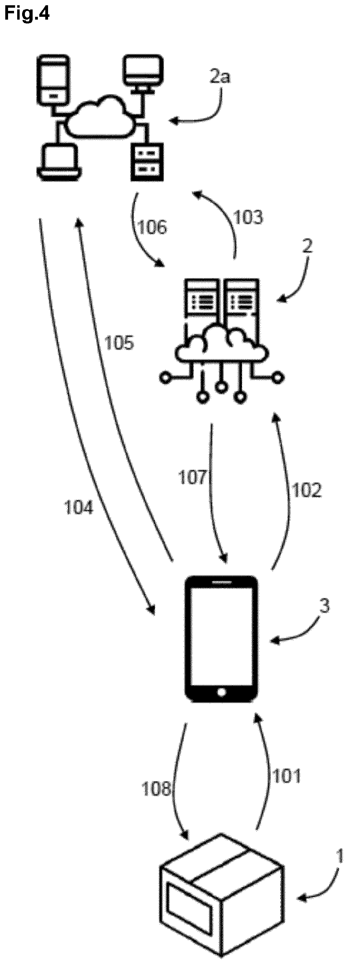

En référence aux figures 4 à 8, des cas d'utilisation sont à présent décrits.

Dans un premier cas, illustré par la figure 4, un destinataire ayant reçu un emballage 1 souhaite se débarrasser dudit emballage 1.

Pour cela, le destinataire qui devient alors un utilisateur, actionne ou agit sur l'actionneur électronique 12 de l'emballage 1. Les premiers moyens de communication 9 de l'emballage 1 émettent alors un premier signal à destination de la plateforme informatique 2, celle-ci interprétant ce premier signal comme une consigne de début de cycle.

Plus précisément, le premier signal est émis par les premiers moyens de communication 9 sans fil vers l'unité informatique 3 par un premier canal de communication 101. L'unité informatique 3 transfère ce premier signal à la plateforme informatique 2 par une deuxième voie de communication 102.

Par la suite, la plateforme informatique 2 émet en direction du nuage informatique 2a, une requête en enlèvement par le biais d'une troisième voie de communication 103.

Le nuage informatique 2a communiquant avec toutes les unités informatiques 3 transfère cette requête aux unités informatiques 3 par le biais d'une quatrième voie de communication 104. Chaque acteur reçoit alors la requête et accepte ou non de prendre en charge l'emballage 1.

De préférence, le nuage informatique 2a comprend des calculateurs permettant de cibler les unités informatiques 3 situées dans un périmètre géographique prédéterminé autour de l'emballage 1 à acheminer. Ainsi, seules les unités informatiques 3 situées dans ce périmètre géographique recevront la requête en enlèvement.

Lorsqu'un acteur 5 accepte la prise en charge de l'emballage 1, il en informe la plateforme informatique 2. Cela se fait notamment par le biais de l'application informatique 4 et notamment par la transmission d'un signal par une cinquième voie de communication 105 entre l'unité informatique et le nuage informatique 2a puis une sixième voie de communication 106 entre le nuage informatique 2a et la plateforme informatique 2.

Dans le cas où plusieurs acteurs 5 acceptent la prise en charge de l'emballage, le premier des acteurs 5 ayant accepté la prise en charge sera celui reconnu par la plateforme informatique 2.

La plateforme informatique 2 enregistre alors dans les bases de données 14 l'information de prise en charge par l'acteur 5.

Plus précisément, la plateforme informatique 2 associe le code d'identification de l'emballage 1 avec le code d'identification de l'acteur 5. Par ailleurs, la plateforme informatique 2 modifie le code de responsabilité associé à l'emballage 1 en fonction du code d'identification de l'acteur 5 qui a accepté la prise en charge de l'emballage 1.

La plateforme informatique 2 transmet ensuite les données d'acheminement de l'emballage 1 à l'acteur 5 qui en a accepté la prise en charge. Cette transmission se fait notamment par une septième voie de communication 107 entre la plateforme informatique 2 et l'application informatique 4 chargée dans l'unité informatique 3 de l'acteur 5.

L'unité informatique 3 transmet un signal à l'emballage 1 pour notifier à l'acteur 5, via l'emballage 1, l'acceptation et le début du cycle d'acheminement.

Cette notification est notamment réalisée par le biais des diodes électroluminescentes et notamment d'une diode clignotant en vert pour signifier un changement de statut dans l'acheminement de l'emballage 1.

Plus particulièrement, cette transmission de signal est réalisée entre les deuxièmes moyens de communication 15 sans fil de l'unité informatique 3 et les premiers moyens de communication 9 sans fil de l'emballage 1.

Par ailleurs, une information ou plusieurs informations peuvent également être envoyée par l'unité informatique 2 à l'emballage 1, ces informations pouvant être affichées sur le dispositif d'affichage 10.

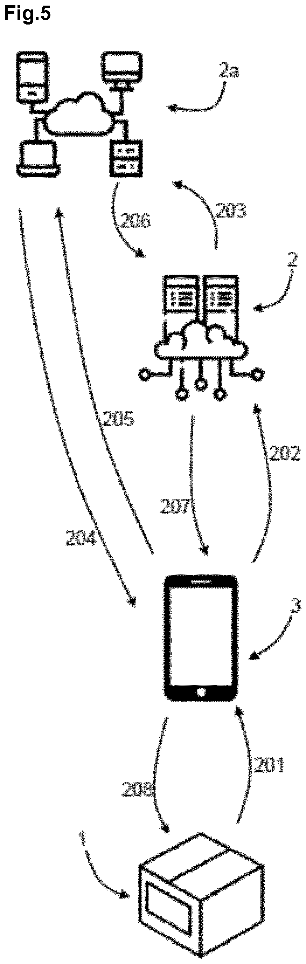

Dans un deuxième cas, illustré sur la figure 5, le destinataire d'un emballage 1 souhaite effectuer un retour d'un produit ou d'un objet contenu dans l'emballage 1, ou d'un autre objet.

Dans ce cas, l'utilisateur actionne l'actionneur électronique 12 de sorte à signifier à la plateforme informatique 2 une consigne de début de cycle d'acheminement par l'intermédiaire du premier signal.

L'emballage 1 communique par une première voie de communication 201 ledit signal à l'unité informatique 2.

L'unité informatique 2 transfère, par une deuxième voie de communication 202, le signal jusqu'à la plateforme informatique 2.

La plateforme informatique 2 transforme puis transfère le premier signal en une requête de retour à destination du nuage informatique 2a, via une troisième voie de communication 203.

Ladite requête de retour est transmise aux acteurs 5 via une quatrième voie de communication 204. Un acteur 5 décide alors de prendre en charge l'emballage 1 et le signifie via l'application informatique 4 au nuage informatique 2a par une cinquième voie de communication 205. Le nuage informatique 2a transmet cette acceptation de prise en charge à la plateforme informatique 2 par une sixième voie de communication 206. Le statut de l'emballage 1 est alors « en attente » de retour.

La plateforme informatique 2 modifie alors en conséquence le code de responsabilité associé à l'emballage 1.

La plateforme informatique 2 transmet ensuite des données de prise en charge de l'emballage 1 à l'acteur 5 ayant accepté cette prise en charge par une septième voie de communication 207.

A titre indicatif, les données peuvent comprendre les coordonnées de localisation de l'enlèvement de l'emballage 1 ainsi que les coordonnées de destination.

L'unité informatique 3 de l'acteur 5 ayant accepté la prise en charge de l'emballage 1 émet un signal à destination de l'emballage 1, via une huitième voie de communication 208. Ce signal permet notamment à l'emballage 1 de signifier à l'acteur 5 qui en a la charge le changement de statut et notamment l'association et la modification du code de responsabilité de l'emballage 1 avec le code d'identification de l'acteur 5. Cela peut notamment se traduire par un clignotement en vert de l'une des LED de l'emballage 1.

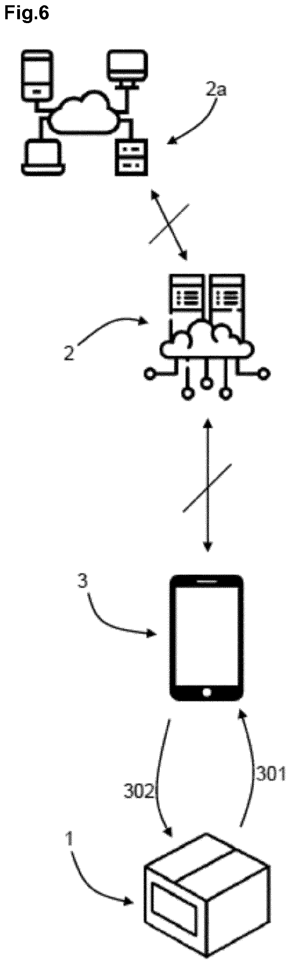

La figure 6 illustre un troisième cas dans lequel il est impossible de choisir l'action à déclencher. Autrement dit, l'appui sur l'actionneur électronique 12 ne permet pas de lancer un cycle puisque, dans ce cas, le cycle n'a pas été complètement défini au préalable.

Dans cette configuration l'utilisateur appuie sur l'actionneur électronique 12. L'emballage 1 et notamment les premiers moyens de communication 9 sans fil transmettent le premier signal vers l'unité informatique 3 par une première voie de communication 301.

L'unité informatique 3 détecte alors que les informations rentrées préalablement pour la configuration de l'emballage 1 ne correspondent pas ou ne permettent pas de réaliser un acheminement correct. A titre d'exemple, le manque d'information peut résider en l'un au moins des motifs suivants :
- absence de coordonnées de départ ;
- absence de coordonnées d'arrivée ;
- absence d'identification du destinataire ;
- absence d'identification de l'émetteur ;
- absence de catégorisation de l'objet à acheminer.

L'unité informatique 3, par le biais de l'application informatique 4, ne peut alors pas transmettre d'information auprès de la plateforme informatique 2 et renvoie alors par une deuxième voie de communication 302 un signal à l'emballage 1. L'emballage 1 traduit le signal reçu par un clignotement en orange de l'une des diodes électroluminescentes et/ou l'affichage d'un message sur le dispositif d'affichage 10 de l'emballage.

A titre indicatif, le message affiché sur l'emballage peut être : « connectez-vous à l'application » ou « connectez-vous à l'application pour renseigner les informations manquantes ».

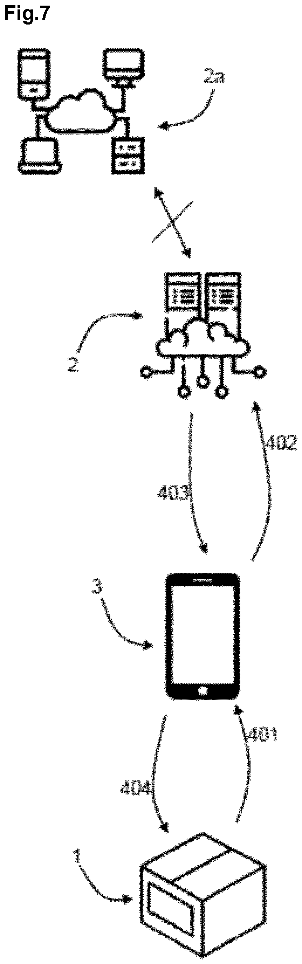

Selon un cinquième cas illustré sur la figure 7, l'utilisateur rapporte l'emballage 1 qu'il vient de recevoir dans un endroit de stockage pour être utilisé ultérieurement par un autre utilisateur.

Dans ce cas, l'utilisateur appuie sur l'actionneur électronique 12. L'emballage 1 émet alors un signal suivant une première voie de communication 401 à destination de la plateforme informatique 2. Plus précisément, le signal est émis vers l'unité informatique 3 qui détecte et transforme le signal à destination de la plateforme informatique 2 et transmet un ordre de « retour pour stockage » à la plateforme informatique 2 via une deuxième voie de communication 402.

La plateforme informatique 2 traite alors ce signal pour déterminer un lieu de remise de l'emballage 1 pour stockage.

Le lieu de remise de l'emballage est notamment déterminé en fonction des coordonnées de géolocalisation de l'emballage 1 lorsque l'utilisateur appuie sur l'actionneur électronique 12. Lorsque le lieu de remise de l'emballage 1 est déterminé, la plateforme informatique 2 transfère ou émet un signal à destination de l'unité informatique 3 par une troisième voie de communication 403. L'unité informatique 3 transfère alors ce signal à l'emballage 1 par une quatrième voie de communication 404 entre les premiers moyens de communication 9 sans fil et les deuxièmes moyens de communication 15 sans fil.

Le signal est traduit par le bloc d'intelligence artificielle 13 de l'emballage 1 de sorte que le dispositif d'affichage affiche 10 affiche les coordonnées du lieu de remise de l'emballage 1 à destination de l'utilisateur.

L'utilisateur se déplace alors pour déposer l'emballage 1 au lieu de remise indiqué sur l'emballage 1 et peut valider la remise soit via l'application informatique 4 de son unité informatique 4, soit en appuyant sur l'actionneur électronique 12.

S'il agit sur l'actionneur électronique 12, l'emballage 1 transmettant un signal à destination de la plateforme informatique 2 avec les coordonnées de géolocalisation de l'emballage 1 qui sont alors comparées aux coordonnées du lieu de remise pour valider la remise.

Un système de récompense peut également être mis en place, permettant à l'utilisateur d'obtenir un ou plusieurs points pour avoir remis l'emballage 1 après utilisation. Cela va notamment dans le sens du faible impact du système d'acheminement sur l'environnement. En effet, en remettant l'emballage 1, celui-ci n'est pas détruit et peut être réutilisé.

En outre, ce mode de réalisation permet à la fois de fidéliser les clients mais également de faire un suivi de confiance des acteurs 5, c'est-à-dire de noter les acteurs 5 pour déterminer un indice de confiance.

Cet indice de confiance peut alors être utilisé par la plateforme informatique 2 en fonction des informations entrées par l'utilisateur sur le contenu des emballages 1, notamment en cas de contenu précieux. En effet, un emballage 1 sera confié à des acteurs 5 présentant un indice de confiance minimal. Ainsi, on évite tout risque de perte ou d'endommagement de l'emballage 1 et donc des objets qu'il contient.

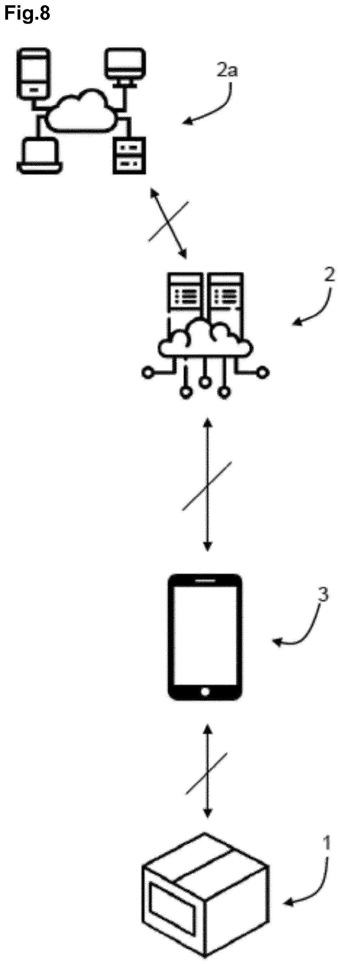

La figure 8 illustre un cinquième cas d'utilisation dans lequel aucune unité informatique 3 n'est connectée à l'emballage 1.

L'utilisateur appuie alors sur l'actionneur électronique 12. L'emballage 1 souhaite alors émettre le premier signal en direction de l'unité informatique 3, mais ce premier signal ne peut aboutir étant donné qu'aucune unité informatique 3 n'est associée à l'emballage 1.

Après un temps d'attente prédéterminé, l'emballage 1, via les diodes électroluminescentes, émet un signal à destination de l'utilisateur. Ce signal prend par exemple la forme d'un clignotement en rouge de l'une des diodes électroluminescentes. Un message d'erreur peut également être affiché sur le dispositif d'affichage 10 de l'emballage 1.

Le système d'acheminement d'objet qui vient d'être décrit présente de nombreux avantages.

Le principal avantage réside dans la fluidité de l'acheminement des objets, ou à tout le moins, dans la fluidité d'exécution des instructions.

En effet, il n'est plus nécessaire à un utilisateur de se connecter de manière fréquente ou récurrente à l'application informatique 4 ou à un site internet pour pouvoir commander et faire débuter un cycle d'acheminement. L'appui sur l'actionneur électronique 12 permet en effet de supprimer ces interactions avec l'application informatique 4 ou un site internet.

Par l'appui sur l'actionneur électronique 12, il est alors possible de lancer un cycle ou d'interagir avec l'emballage 1 ou la plateforme informatique 2 durant le cycle d'acheminement.

Un autre avantage réside dans le fait que le transport et l'acheminement d'un objet depuis les coordonnées de départ jusqu'à des coordonnées d'arrivée est sécurisé.

L'association de codes d'identification de l'emballage 1, de codes d'identification des acteurs 5 et de codes de responsabilité permet d'offrir une traçabilité complète de l'acheminement des objets et notamment de la responsabilité des objets et des emballages 1.

Par ailleurs, l'utilisation d'un système de chaîne de blocs 20 sécurise d'autant plus d'acheminement que lorsque les informations d'un bloc sont ajoutées à la chaîne de blocs 20, il n'est plus possible de les modifier. Autrement dit, si un acteur a des intentions mauvaises envers l'emballage 1 et son contenu, il ne pourra pas effacer les traces de sa possession de l'emballage 1.

Les moyens de géolocalisation 17 permettent en outre de suivre de manière instantanée le positionnement de l'emballage 1 et donc assure un suivi en temps réel de l'emballage 1.

L'unité informatique 3 qui comprend des moyens d'horodatage, par exemple une horloge, permet d'apporter des précisions à chaque changement de statut de l'emballage 1.

Par changement de statut, il est notamment entendu le passage d'un emballage 1 d'un état de stockage à un état d'utilisation, la prise en charge de l'emballage par un acteur 5, le transfert de l'emballage 1 d'un premier acteur 5 à un deuxième acteur 5 et la modification du code de responsabilité associé à l'emballage, ou encore l'arrivée en des points précis d'acheminement de l'emballage 1 tels que par exemple le point d'arrivée ou un point de contrôle imposé.

Par ailleurs, l'ouverture de l'emballage 1 peut être bloquée lorsqu'un cycle d'acheminement est initié. Pour cela, la plateforme informatique est paramétrée pour émettre un signal à destination de l'emballage, ce signal étant interprété par l'emballage 1 comme un signal de blocage du dispositif de verrouillage 8 dans sa position fermée. Le déblocage du dispositif de verrouillage 8 peut alors être réalisé de manière automatique dès la fin du cycle d'acheminement, ou par l'émission d'un signal par la plateforme informatique 2.

Le paramétrage de la plateforme informatique peut être réalisé de sorte à bloquer le dispositif de verrouillage 8 en des localisations particulières ou lors d'étapes prédéterminées de l'acheminement. En outre, l'emballage 1 peut comprendre différents capteurs tels que des capteurs de température, des capteurs d'humidité, des capteurs d'accélération, des caméras, des capteurs de pression, cela notamment pour enregistrer de manière continue différentes actions appliquées à l'emballage.

Plusieurs cycles d'utilisation du système d'acheminement peuvent notamment être prévus, par exemple :
- un premier cycle d'acheminement d'un objet comprenant une étape de collecte, une étape de voyage et une étape de distribution ;
- un deuxième cycle dit de réutilisation dans lequel l'emballage est transmis pour être stocké par un transporteur en vue d'être réutilisé pour une action d'acheminement par exemple ;
- un troisième cycle de retour dans lequel le destinataire d'un objet réutilise immédiatement l'emballage qui suit alors une première étape de collecte, une étape de voyage et une étape de distribution.

Selon un mode de réalisation particulier, l'actionneur électronique 12 permet également l'envoi d'un signal signifiant la fin d'un cycle d'acheminement dans lequel une confirmation en réception de l'emballage, en acceptation de l'emballage ou encore en paiement de taxes par exemple, est notifiée à la plateforme informatique 2 et donc aux différents acteurs 5 et plus particulièrement à l'émetteur de l'emballage.

Avantageusement, l'emballage 1 comporte une batterie permettant de conserver actifs les moyens électroniques tels que les premiers moyens de communication 9 sans fil, les moyens de géolocalisation 17 si ceux-ci sont intégrés à l'emballage 1, le dispositif d'affichage 10 et le dispositif de notification 11.

Un autre avantage de ce système d'acheminement réside dans son faible impact sur l'environnement. En effet, les emballages peuvent être réutilisés pour l'acheminement d'un nouvel objet et comprennent notamment des moyens de géolocalisation et de communication sans fil permettant, de sorte qu'en cas d'abandon sauvage de l'emballage, ce dernier puisse être retrouvé facilement et rapidement.

Enfin, le système d'acheminement d'objet est plus fiable qu'un système classique puisque, en cas d'avarie lors de l'acheminement de l'un des emballages 1, seul l'emballage 1 impacté pourra voir sa livraison retardée, contrairement à un système classique dans lequel plusieurs emballages sont transportés en même temps. En effet, pour un système d'acheminement classique, si, par exemple, les moyens de locomotions viennent à tomber en panne, toute la cargaison, c'est-à-dire tous les emballages contenus dans le moyen de locomotion, sera délivrée avec un retard. Cela n'est toutefois valable qu'une fin de cycle d'acheminement lorsque l'acteur 5 est un individu d'une communauté ou une personne individuelle profitant de son déplacement personnel pour acheminer un emballage 1.

En revanche, pour les autres parties du cycle d'acheminement, les emballages 1 sont transportés en masse, c'est-à-dire par plusieurs à la fois. Ainsi, en cas d'avarie lors du transport, tous les emballages 1 sont impactés à la fois.

## Revendications

1. Système d'acheminement d'objets, comprenant :
- des emballages (1) intégrant des premiers moyens de communication (9) sans fil ;
- une plateforme informatique (2) incluant au moins une base de données (14) regroupant, pour chaque emballage (1), des informations de son cycle d'acheminement ;
la plateforme informatique (2) étant paramétrée pour effectuer un suivi numérique de géolocalisation horodatée de chaque emballage (2) à partir d'une consigne de début de cycle d'acheminement, chaque emballage (1) portant un actionneur électronique (12) couplé aux premiers moyens de communication (9) sans fil pour émettre un premier signal à destination de la plateforme informatique (2), ledit premier signal étant interprété par la plateforme informatique (2) en tant que consigne de début de cycle d'acheminement, l'emballage formant un conteneur pour le transport des objets.

2. Système d'acheminement d'objets selon la revendication 1, **caractérisé en ce qu'**il comprend également :
- une pluralité d'unités informatiques (3) détenues par des acteurs (5) d'une chaine logistique et comprenant chacune des deuxièmes moyens de communication (15) destinés à être appairés avec les premiers moyens de communication (9) sans fil d'un emballage (1), une application informatique (4) destinée à être chargée par chaque unité informatique (3), pour permettre un échange de données informatiques entre les unités informatiques (3) et la ou les bases de données (14),

3. Système d'acheminement d'objets selon la revendication 1, **caractérisé en ce que** la plateforme informatique (2) est paramétrée pour émettre une requête de prise en charge d'un emballage (1) à au moins une unité informatique (3) à partir d'une consigne de début de cycle d'acheminement.

4. Système d'acheminement d'objets selon l'une quelconque des revendications précédentes, **caractérisé en ce que** la base de données (14) regroupe :
- des coordonnées de départ de l'emballage (1) ;
- des coordonnées d'arrivée de l'emballage (1) ;
- une série de premiers codes d'identification associés chacun à un emballage (1),
- une série de deuxième codes d'identification associés chacun à un acteur (5) .

5. Système d'acheminement d'objets selon les revendications 3 et 4, **caractérisé en ce que** la plateforme informatique (2) est paramétrée pour associer un code d'identification d'un emballage (1) avec un code d'identification d'un acteur (5), à partir d'une consigne de début de cycle et d'une acceptation de la requête de prise en charge par un acteur (5) via l'application informatique (4).

6. Système d'acheminement d'objets selon la revendication 4 ou la revendication 5, **caractérisé en ce que** chaque actionneur électronique (12) est couplé aux premiers moyens de communication (9) sans fil pour émettre, à destination de la plateforme informatique (2), un deuxième signal interprété par la plateforme informatique (2) en tant que requête d'association du code d'identification d'un nouvel acteur (5) avec le code d'identification de l'emballage (1).

7. Système d'acheminement d'objets selon la revendication 5 ou la revendication 6, **caractérisé en ce que** la base de donnée (14) regroupe également, pour chaque emballage (1), un code de responsabilité destiné à identifier l'acteur (5) transitoirement en charge de l'emballage (1), et **en ce que** la plateforme informatique (2) est paramétrée pour recevoir un signal de prise en responsabilité de l'acteur (5) transitoirement en charge de l'emballage (1) par l'intermédiaire de l'application informatique (4) contenue dans l'unité informatique (3) que l'acteur (5) détient, et pour modifier en conséquence, avec le code d'identification dudit acteur (5), le code de responsabilité associé à l'emballage (1).

8. Système d'acheminement d'objets selon la revendication précédente, **caractérisé en ce qu'**il met en oeuvre une chaîne de blocs (20) programmée pour autoriser ou refuser la modification du code de responsabilité associé à l'emballage (1).

9. Système d'acheminement d'objets selon l'une quelconque des revendications précédentes, **caractérisé en ce que** la plateforme informatique (2) est paramétrée pour transmettre aux acteurs (5) des informations d'acheminement via l'application informatique (4).

10. Système d'acheminement d'objets selon l'une quelconque des revendications précédentes, **caractérisé en ce que** chaque emballage (1) comprend un dispositif de verrouillage (8) pouvant adopter :
- un état ouvert, permettant l'accès à l'intérieur de l'emballage (1),
- un état fermé, bloquant l'accès à l'intérieur de l'emballage (1),
le dispositif de verrouillage (8) étant couplé aux premiers moyens de communication (9) sans fil pour transmettre à la plateforme informatique (2) un troisième signal définissant l'état ouvert ou l'état fermé du dispositif de verrouillage (8).

11. Système d'acheminement d'objets selon la revendication précédente, **caractérisé en ce que** la plateforme informatique (2) est paramétrée pour interdire le début d'un cycle d'acheminement lorsque le troisième signal définit un état ouvert du dispositif de verrouillage (8).

12. Système d'acheminement d'objets selon la revendication 3, **caractérisé en ce que** le troisième signal est envoyé simultanément au premier signal ou quasiment.

13. Système d'acheminement d'objets selon l'une quelconque des revendications précédentes, **caractérisé en ce que** chaque unité informatique (3) comprend des moyens de géolocalisation (17) susceptibles de déterminer des coordonnées instantanées de géolocalisation d'un emballage (17) qui lui est associé.

14. Système d'acheminement d'objets selon la revendication précédente, **caractérisé en ce que** chaque unité informatique (3) comprend un calculateur (19) paramétré pour comparer les coordonnées instantanées de géolocalisation avec les coordonnées de départ de l'emballage (1) et les coordonnées d'arrivée de l'emballage (1), et définir un état d'avancement du cycle d'acheminement.

15. Système d'acheminement d'objets selon l'une quelconque des revendications précédentes, **caractérisé en ce que** chaque emballage (1) comprend un dispositif de notification (11) et **en ce que** la plateforme informatique (2) est paramétrée pour déclencher le dispositif de notification en fonction d'une action prédéterminée parmi lesquelles :
- un début de cycle d'acheminement ;
- un état ouvert du dispositif de verrouillage (8) ;
- une modification du code de responsabilité associé à l'emballage (8).

16. Système d'acheminement d'objets selon l'une quelconque des revendications précédentes, **caractérisé en ce que** les unités informatiques (3) appartiennent au groupe suivant :
- ordiphones
- ordinateur
- tablette informatique.

## Patentansprüche

1. System zur Leitweglenkung von Objekten, umfassend:
- Verpackungen (1), die erste drahtlose Kommunikationsmittel (9) integrieren;
- eine IT-Plattform (2), die mindestens eine Datenbank (14) einschließt, die für jede Verpackung (1) Informationen über ihren Leitweglenkungszyklus vereint;
wobei die IT-Plattform (2) zur Durchführung einer zeitgestempelten digitalen Standortverfolgung jeder Verpackung (1) ausgehend von einem Sollwert für den Start des Leitweglenkungszyklus parametriert ist,
wobei jede Verpackung (1) einen elektronischen Aktuator (12) trägt, der an erste drahtlose Kommunikationsmittel (9) gekoppelt ist, um ein erstes Signal an die IT-Plattform (2) zu senden, wobei das erste Signal von der IT-Plattform (2) als Sollwert für den Start des Leitweglenkungszyklus interpretiert wird, wobei die Verpackung ein Behältnis für den Transport der Objekte bildet.

2. System zur Leitweglenkung von Objekten nach Anspruch 1, **dadurch gekennzeichnet, dass** es ebenfalls umfasst:
- eine Vielzahl von IT-Einheiten (3), über die Akteure (5) einer Logistikkette verfügen und die jeweils zweite Kommunikationsmittel (15) umfassen, die bestimmt sind, mit den ersten drahtlosen Kommunikationsmitteln (9) einer Verpackung (1) gepaart zu sein, wobei eine IT-Anwendung (4) bestimmt ist, von jeder IT-Einheit (3) geladen zu sein, um einen Austausch von IT-Daten zwischen den IT-Einheiten (3) und der oder den Datenbanken (14) zu gestatten.

3. System zur Leitweglenkung von Objekten nach Anspruch 1, **dadurch gekennzeichnet, dass** die IT-Plattform (2) parametriert ist, um eine Anfrage bezüglich der Übernahme einer Verpackung (1) an mindestens eine IT-Einheit (3) ausgehend von einem Sollwert für den Start des Leitweglenkungszyklus zu senden.

4. System zur Leitweglenkung von Objekten nach einem der vorangehenden Ansprüche, **dadurch gekennzeichnet, dass** die Datenbank (14) vereint:
- Start-Koordinaten der Verpackung (1);
- Ankunfts-Koordinaten der Verpackung (1);
- eine Reihe erstes Identifikationscodes, die jeweils mit einer Verpackung (1) verbunden sind,
- eine Reihe zweiter Identifikationscodes, die jeweils mit einem Akteur (5) verbunden sind.

5. System zur Leitweglenkung von Objekten nach den Ansprüchen 3 und 4, **dadurch gekennzeichnet, dass** die IT-Plattform (2) parametriert ist, um einen Identifikationscode einer Verpackung (1) mit einem Identifikationscode eines Akteurs (5) ausgehend von einem Sollwert für den Start des Zyklus und einer Genehmigung der Übernahmeanfrage durch einen Akteur (5) über die IT-Anwendung (4) zu verbinden.

6. System zur Leitweglenkung von Objekten nach Anspruch 4 oder Anspruch 5, **dadurch gekennzeichnet, dass** jeder elektronische Aktuator (12) an erste drahtlose Kommunikationsmittel (9) gekoppelt ist, um an die IT-Plattform (2) ein zweites Signal zu senden, das von der IT-Plattform (2) als Anfrage für eine Verbindung des Identifikationscodes eines neuen Akteurs (5) mit dem Identifikationscode der Verpackung (1) interpretiert wird.

7. System zur Leitweglenkung von Objekten nach Anspruch 5 oder Anspruch 6, **dadurch gekennzeichnet, dass** die Datenbank (14) ebenfalls für jede Verpackung (1) einen Verantwortungscode vereint, der dazu bestimmt ist, den übergangsweise für die Verpackung (1) zuständigen Akteur (5) zu identifizieren, und dass die IT-Plattform (2) parametriert ist, um ein Signal bezüglich der Übernahme von Verantwortung durch den Akteur (5), der übergangsweise für die Verpackung (1) zuständig ist, über die IT-Anwendung (4) zu empfangen, die in der IT-Einheit (3) enthalten ist, die der Akteur (5) besitzt, und um folglich den der Verpackung (1) zugeordneten Verantwortungscode mit dem Identifikationscode des Akteurs (5) zu ändern.

8. System zur Leitweglenkung von Objekten nach vorangehendem Anspruch, **dadurch gekennzeichnet, dass** es eine Blockkette (20) umsetzt, die programmiert ist, um die Änderung des der Verpackung (1) zugeordneten Verantwortungscodes zu gestatten oder zu verweigern.

9. System zur Leitweglenkung von Objekten nach einem der vorangehenden Ansprüche, **dadurch gekennzeichnet, dass** die IT-Plattform (2) parametriert ist, um über die IT-Anwendung (4) Leitweglenkungsinformationen an die Akteure (5) zu übertragen.

10. System zur Leitweglenkung von Objekten nach einem der vorangehenden Ansprüche, **dadurch gekennzeichnet, dass** jede Verpackung (1) eine Verriegelungsvorrichtung (8) umfasst, die annehmen kann:
- einen geöffneten Zustand, der den Zugriff in das Innere der Verpackung (1) gestattet,
- einen geschlossenen Zustand, der den Zugriff in das Innere der Verpackung (1) blockiert,
wobei die Verriegelungsvorrichtung (8) an die ersten drahtlosen Kommunikationsmittel (9) gekoppelt ist, um an die IT-Plattform (2) ein drittes Signal zu übertragen, das den geöffneten Zustand oder den geschlossenen Zustand der Verriegelungsvorrichtung (8) definiert.

11. System zur Leitweglenkung von Objekten nach vorangehendem Anspruch, **dadurch gekennzeichnet, dass** die IT-Plattform (2) parametriert ist, um den Start eines Leitweglenkungszyklus zu untersagen, wenn das dritte Signal einen geöffneten Zustand der Verriegelungsvorrichtung (8) definiert.

12. System zur Leitweglenkung von Objekten nach Anspruch 3, **dadurch gekennzeichnet, dass** das dritte Signal gleichzeitig oder quasi gleichzeitig mit dem ersten Signal gesendet wird.

13. System zur Leitweglenkung von Objekten nach einem der vorangehenden Ansprüche, **dadurch gekennzeichnet, dass** jede IT-Einheit (3) Geolokalisierungsmittel (17) umfasst, die imstande sind, momentane Geolokalisierungskoordinaten einer Verpackung (1) zu bestimmen, die ihr zugeordnet sind.

14. System zur Leitweglenkung von Objekten nach vorangehendem Anspruch, **dadurch gekennzeichnet, dass** jede IT-Einheit (3) einen Rechner (19) umfasst, der parametriert ist, um die momentanen Geolokalisierungskoordinaten mit den Start-Koordinaten der Verpackung (1) und den Ankunfts-Koordinaten der Verpackung (1) zu vergleichen und einen Fortschrittszustand des Leitweglenkungszyklus zu definieren.

15. System zur Leitweglenkung von Objekten nach einem der vorangehenden Ansprüche, **dadurch gekennzeichnet, dass** jede Verpackung (1) eine Benachrichtigungsvorrichtung (11) umfasst und dass die IT-Plattform (2) parametriert ist, um die Benachrichtigungsvorrichtung in Abhängigkeit von einer vorbestimmten Aktion auszulösen, zu der gehören:
- ein Start des Leitweglenkungszyklus;
- ein geöffneter Zustand der Verriegelungsvorrichtung (8) ;
- eine Änderung des der Verpackung (1) zugeordneten Verantwortungscodes.

16. System zur Leitweglenkung von Objekten nach einem der vorangehenden Ansprüche, **dadurch gekennzeichnet, dass** die IT-Einheiten (3) zu der folgenden Gruppe gehören:
- Smartphones,
- Rechner,
- Tablet.

## Claims

1. A system for conveying objects, comprising:
- package (1) integrating first wireless communication means (9);
- a computer platform (2) including at least one database (14) grouping, for each package (1), information about its conveying cycle;
the computer platform (2) being parameterized to perform a digital tracking of the time-stamped geolocation of each package (1) based on a conveying cycle start instruction, each package (1) carrying an electronic actuator (12) coupled to the first wireless communication means (9) to emit a first signal to the computer platform (2), said first signal being interpreted by the computer platform (2) as a conveying cycle start instruction, the package forming a container for transporting the objects.

2. The system for conveying objects according to claim 1, **characterized in that** it also comprises:
- a plurality of computer units (3) held by actors (5) of a logistics chain and each comprising second communication means (15) intended to be paired with the first wireless communication means (9) of a package (1), a computer application (4) intended to be loaded by each computer unit (3), to allow an exchange of computer data between the computer units (3) and the database(s) (14).

3. The system for conveying objects according to claim 1, **characterized in that** the computer platform (2) is parameterized to issue a request for handling a package (1) to at least one computer unit (3) from a conveying cycle start instruction.

4. The system for conveying objects according to any one of the preceding claims, **characterized in that** the database (14) groups:
- coordinates of departure of the package (1);
- coordinates of arrival of the package (1);
- a series of first identification codes each associated with a package (1),
- a series of second identification codes each associated with an actor (5).

5. The system for conveying objects according to claims 3 and 4, **characterized in that** the computer platform (2) is parameterized to associate an identification code of a package (1) with an identification code of an actor (5), from a cycle start instruction and an acceptance of the handling request by an actor (5) via the computer application (4).

6. The system for conveying objects according to claim 4 or 5, **characterized in that** each electronic actuator (12) is coupled to the first wireless communication means (9) to emit, to the computer platform (2), a second signal interpreted by the computer platform (2) as a request for associating the identification code of a new actor (5) with the identification code of the package (1) .

7. The system for conveying objects according to claim 5 or 6, **characterized in that** the database (14) also groups, for each package (1), a responsibility code intended to identify the actor (5) temporarily in charge of the package (1), and **in that** the computer platform (2) is parameterized to receive a responsibility signal from the actor (5) temporarily in charge of the package (1) via the computer application (4) contained in the computer unit (3) that the actor (5) holds, and to modify accordingly, with the identification code of said actor (5), the responsibility code associated with the package (1).

8. The system for conveying objects according to the preceding claim, **characterized in that** it implements a blockchain (20) programmed to authorize or refuse the modification of the responsibility code associated with the package (1).

9. The system for conveying objects according to any one of the preceding claims, **characterized in that** the computer platform (2) is parameterized to transmit conveying information to the actors (5) via the computer application (4) .

10. The system for conveying objects according to any one of the preceding claims, **characterized in that** each package (1) comprises a locking device (8) which can adopt:
- an open state, allowing access to the inside of the package (1),
- a closed state, blocking access to the inside of the package (1),
the locking device (8) being coupled to the first wireless communication means (9) to transmit to the computer platform (2) a third signal defining the open state or the closed state of the locking device (8).

11. The system for conveying objects according to the preceding claim, **characterized in that** the computer platform (2) is parameterized to prohibit the start of a conveying cycle when the third signal defines an open state of the locking device (8).

12. The system for conveying objects according to claim 3, **characterized in that** the third signal is sent simultaneously with the first signal or almost.

13. The system for conveying objects according to any one of the preceding claims, **characterized in that** each computer unit (3) comprises geolocation means (17) capable of determining instantaneous geolocation coordinates of a package (1) associated therewith.

14. The system for conveying objects according to the preceding claim, **characterized in that** each computer unit (3) comprises a calculator (19) parameterized to compare the instantaneous geolocation coordinates with the coordinates of departure of the package (1) and the coordinates of arrival of the package (1), and define a state of progress of the conveying cycle.

15. The system for conveying objects according to any one of the preceding claims, **characterized in that** each package (1) comprises a notification device (11) and **in that** the computer platform (2) is parameterized to trigger the notification device based on a predetermined action including:
- a start of a conveying cycle;
- an open state of the locking device (8);
- a modification of the responsibility code associated with the package (1).

16. The system for conveying objects according to any one of the preceding claims, **characterized in that** the computer units (3) belong to the following group:
- smartphones
- computer
- tablet computer.
